# EUROPEAN PATENT APPLICATION

(11) **EP 4 810 270 A1**
(43) Date of publication of application: **23.09.2026**
(21) Application number: 24891587.8
(22) Date of filing: 09.07.2024
(51) Int. Cl.: B60C 23/04, B60C 9/04

(54) **TIRE HAVING ELECTRONIC DEVICE IN CONSIDERATION OF CARCASS ARRANGEMENT INTERVAL AND ANGLE**

(30) Priority: 13.11.2023 KR 20230156067; 13.11.2023 KR 20230156070
(71) Applicant: HANKOOK TIRE & TECHNOLOGY CO., LTD, Gyeonggi-do 13494 (KR)
(72) Inventor: SO, Soon-Hong, Daejeon 34127 (KR)
(74) Representative: Zimmermann, Tankred Klaus
(86) International application number: PCT/KR2024/009729
(87) International publication number: WO 2025/105638

(57) **Abstract**

The present invention relates to a tire having an electronic device in consideration of a carcass arrangement interval and, more specifically, to a tire having an electronic device in consideration of a carcass arrangement interval for improving recognition performance by increasing induced electromotive force. To achieve the purpose described above, the present invention provides carcassa tire having an electronic device considering the arrangement of the carcass comprising: a carcass having a plurality of carcass cords; and an electronic device provided on the sidewall having an antenna extending in the longitudinal direction, wherein the antenna forms a closed loop is defined as an antenna unit, wherein the antenna unit arranged not to overlap between the arranged carcass cord.

## Description

### [TECHNICAL FIELD]

The present invention relates to a tire having an electronic device considering the arrangement of the carcass, and more specifically relates to a tire equipped with an electronic device considering the arrangement spacing and angle of the carcass to enhance recognition performance by increasing induced electromotive force, strengthen the durability of the electronic device, and minimize the impact on the tire interior.

### [BACKGROUND ART]

With the recent increase in technological development for connected vehicles and autonomous vehicles, RFID tires, electronic tires, and intelligent tires, which attach or embedded electronic devices within the tire, are being developed and sold.

These intelligent tires are designed to measure tire-related information, process the measured data, and deliver the information to the user.

Various wireless transmission methods are used to enable this information delivery.

In particular, the electronic devices installed in intelligent tires are designed with electronic chips and antennas according to each consumer's desired frequency and recognition distance. Depending on the circuit design of the receiver, information transmitted at various frequencies can be acquired.

Typically, the transmission frequency considers the dielectric constant of air. However, since air has a dielectric constant practically equal to 1, it is generally designed so that there is no difference between the transmission and receiving frequencies.

. However, depending on the installation position of the electronic device, conditions such as a compound, tire structure, sidewall thickness, and air layer differ, and the dielectric constant also changes according to these changes in conditions.

Despite the fact that such changes in permittivity cause problems by modulating the transmission frequency and reducing the accuracy of the information, there was a problem in the past where the design of this transmission frequency was made identical to the standard receiving frequency.

In addition, in the prior art, when electronic devices were inserted into a tire, factors such as directionality were not considered. Therefore, when repeated flexing motion occurred from the bead wire toward the tread direction, the electronic devices were easily damaged.

Furthermore, in the prior art, the overlapping of the carcass cord and the antenna reduced the induced electromotive force, leading to a decrease in the recognition performance of the electronic device.

### <Prior Art document>

U.S. Patent No. 7319380

### [DETAILED DESCRIPTION OF THE INVENTION]

### [TECHNICAL PROBLEM]

The objective of the present invention to solve the above problems is to provide a tire having an electronic device, considering the arrangement spacing and angle of the carcass to significantly increase the induced electromotive force and improve recognition performance, enhance the durability of the electronic device, and minimize the impact on the tire interior.

The technical problems addressed by the present invention are not limited to those described above and further include other problems that may be understood by a person skilled in the art from the descriptions of this specification.

### [SOLUTION TO PROBLEM]

The configuration of the present invention for achieving the above objectives comprising: a carcass having a plurality of carcass cords; and an electronic device provided on the sidewall having an antenna extending in the longitudinal direction, wherein the antenna forms a closed loop is defined as an antenna unit, wherein the antenna unit arranged not to overlap between the arranged carcass cord.

In an embodiment of the present invention, the electronic device may be configured in that one or more pitch of the antennas, which is an interval of the antennas, is arranged between a pair of adjacent carcass cords.

In an embodiment of the present invention, the electronic device may be configured in that one or more carcass cord is arranged within the pitch of the antenna, which is an interval of the antenna.

In an embodiment of the present invention, the electronic device comprising: a base forming a body; a main chip provided on the base and including an electronic module; and the antenna configured to be connected to the main chip.

In an embodiment of the present invention, the pitch of the antenna is arranged at equal or unequal intervals of 0.01 to 2.00 mm.

In an embodiment of the present invention, the electronic device may be configured in that a center line connecting centers of both ends of the antenna in a straight line forms an angle of 70 to 110 degrees with the carcass cords.

In an embodiment of the present invention, the electronic device may be designed to have a transmission frequency at least 1.05 times greater than the standard receiving frequency for measuring tire information.

In an embodiment of the present invention, the carcass cord may be arranged at intervals of 0.2 to 0.3 mm.

In an embodiment of the present invention, wherein defined as a first point where the bead wire and bead wire rubber meet, as a second point where the end of the bead filler, and as a third point where the end of the belt, wherein the electronic device is arranged to be formed on the sidewall between the first point and the third point.

In an embodiment of the present invention, the electronic device may be located at least 11 mm away from both the first point and the third point.

The configuration of the present invention for achieving the above objectives comprising: a carcass having a carcass cord; and an antenna extending in the longitudinal direction, and an electronic device provided on the sidewall, wherein the electronic device is provided considering the carcass arrangement angle such that the centerline connecting the centers of both ends of the antenna in a straight line and the carcass cord form an angle of 70 to 110 degrees, thereby providing a tire equipped with the electronic device.

In an embodiment of the present invention, the electronic device may be comprising: a base forming a body; a main chip provided on the base and including an electronic module; and the antenna provided to be connected to the main chip.

In an embodiment of the present invention, the antenna may be formed to extend outwardly and be exposed on both sides from the base.

In an embodiment of the present invention, the antenna may be printed and formed on the base plate.

In an embodiment of the present invention, the electronic device may be arranged to be formed on the sidewall between a first point, defined as the location where the bead wire and bead wire rubber meet, a second point, defined as the end of the bead filler, and a third point, defined as the end of the belt.

In an embodiment of the present invention, the electronic device may be provided at least 11 mm away from both the first point and the third point.

In an embodiment of the present invention, the electronic device may further comprise one or more memories for recording tire information.

In an embodiment of the present invention, the electronic device may be designed to have a transmission frequency that is at least 1.05 times greater than a standard receiving frequency for measuring tire information.

In an embodiment of the present invention, the antenna may be arranged to be spaced apart at intervals of 0.1 to 10 mm, either equidistantly or non-equidistantly.

In an embodiment of the present invention, the electronic device may be formed with a width and thickness of more than 0 and less than or equal to 3 mm, and a total length of 30 mm to 150 mm.

### [ADVANTAGEOUS EFFECTS OF INVENTION]

The effect of the present invention according to the above configuration is that the electronic device and the tire can be manufactured integrally as a single unit.

Furthermore, according to the present invention, the durability of the electronic device can be improved, and the impact on the interior of the tire can be minimized.

Furthermore, according to the present invention, the induced electromotive force can be significantly increased, thereby improving the recognition performance of the electronic device.

The effects of the present invention are not limited to the above effects, and should be understood to include all effects inferable from the detailed description of the invention or the configuration of the invention described in the claims.

### [BRIEF DESCRIPTION OF THE DRAWINGS]

Fig. 1 shows a tire having an electronic device, considering the spacing and angle of the carcass arrangement according to an embodiment of the present invention.
Fig. 2 is a numerical analysis graph showing shear stress according to position according to a first embodiment of the present invention.
Fig. 3 shows an electronic device according to a first embodiment of the present invention.
Fig. 4 shows an electronic device according to a second embodiment of the present invention.
Fig. 5 shows an electronic device according to a third embodiment of the present invention.
Fig. 6 shows the angle between the centerline of the electronic device and the carcass of a tire equipped with the electronic device, considering the carcass arrangement spacing and angle according to an embodiment of the present invention.
Fig. 7 shows the angle between the centerline of the electronic device and the carcass cord is 90 degrees according to an embodiment of the present invention.
Fig. 8 shows the angle between the centerline of the electronic device and the carcass cord is 0 degrees.
Fig. 9 shows the arrangement of the electronic device and the carcass according to an embodiment of the present invention.
Fig. 10 shows an arrangement of an electronic device and a carcass according to another embodiment of the present invention.
Fig. 11 shows the electromagnetic field according to a first embodiment of the present invention.

### [BEST MODE]

The most preferred a first embodiment of the present invention comprises: a carcass having a carcass cord comprising a plurality of carcass cords; and an antenna extending in the longitudinal direction, and an electronic device provided on the sidewall, wherein the electronic device is arranged such that the antenna unit, defined as the antenna forming a closed loop, is arranged between the arrayed carcass cord without overlapping.

### [DESCRIPTION OF EMBODIMENTS]

Hereinafter, the present invention is described with reference to the accompanying drawings. However, the present invention may be modified in various different ways and is not limited to the embodiments described herein. Further, in the accompanying drawings, components irrelevant to the description will be omitted in order to clearly describe the present invention, and similar reference numerals will be used to describe similar components throughout the specification.

Throughout the specification, when an element is referred to as being "connected with (coupled to, combined with, in contact with)" another element, it may be "directly connected" to the other element and may also be "indirectly connected" to the other element with another element intervening therebetween. Further, unless explicitly described otherwise, "comprising" any components will be understood to imply the inclusion of other components rather than the exclusion of any other components.

Terms used in the present invention are used only in order to describe specific exemplary examples rather than limiting the present invention. Singular forms are intended to include plural forms unless the context clearly indicates otherwise. It will be further understood that the terms "comprise" or "have" used in this specification specify the presence of stated features, numerals, steps, operations, components, parts, or a combination thereof, but do not preclude the presence or addition of one or more other features, numerals, steps, operations, components, parts, or a combination thereof.

Terms '~er', '~unit', '~module', etc. used herein mean the units for processing at least one function or operation and may be implemented by hardware, software, or a combination of hardware and software.

Further, in the specification, when a step is positioned "before" or "after" another step, this includes the same right as not only when the step and another step are in a direct time-serial relationship, but when they are in an indirect time-serial relationship in which the orders of the two steps may be time-serially changed such as mixing of the steps after the steps.

Hereinafter, examples of the present invention are described in detail with reference to the accompanying drawings.

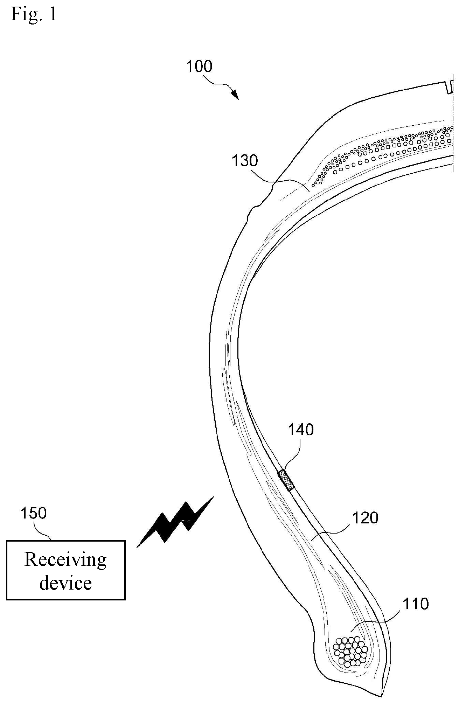

Fig. 1 shows a tire having an electronic device, considering the spacing and angle of the carcass arrangement according to an embodiment of the present invention.

Referring to Fig.s 1 and 2, the tire (100) may be provided with a first point (110) where the bead wire and bead wire rubber meet, a second point (120) being the end portion of the bead filler, and a third point (130) being the end of the carcass and belt.

Furthermore, the tire (100) may be provided to further include an electronic device (140), a receiving device (150), and a carcass (160).

Here, the electronic device (140) may be provided to be located on the sidewall between the first point (110) and the third point (130).

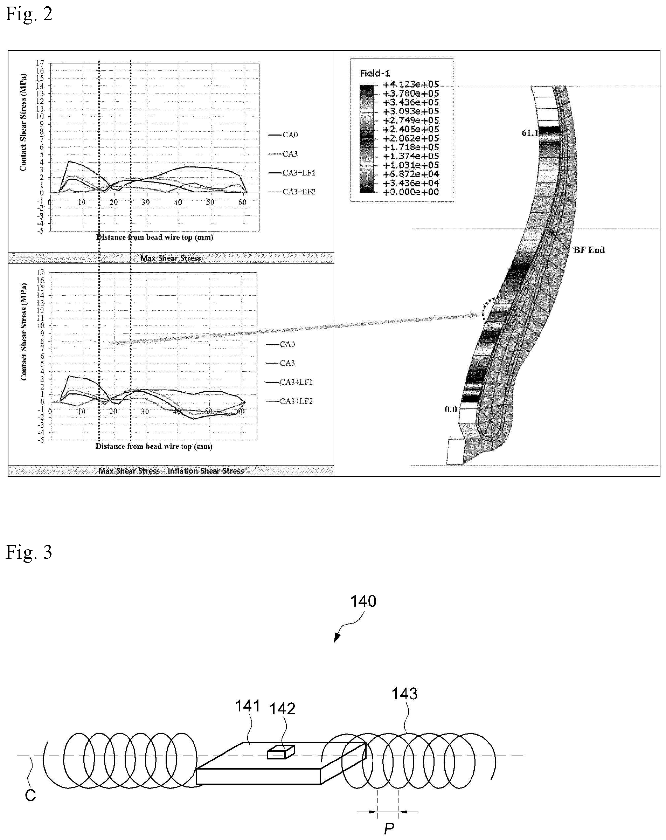

Fig. 2 is a numerical analysis graph showing shear stress according to position according to an embodiment of the present invention.

Referring to Fig. 2, the electronic device (140) may be positioned between the first point (110) and the third point (130), specifically at a location corresponding to where the shear stress is minimally applied.

In particular, the graph in Fig. 2 shows that shear stress is high at positions adjacent to the first point (110) and the third point (130). Therefore, the electronic device (140) may be arranged to be inserted and attached at a position spaced at least 11 mm away from the first point (110) and the third point (130), where the shear stress is relatively small.

The electronic device (140) may be provided to be integrated with the tire by applying the topping member to only one side, integrating it during the molding process, and curing it.

Fig. 3 shows an electronic device according to a first embodiment of the present invention.

Referring to Fig. 3, the electronic device (140) according to the embodiment may include a base (141), a main chip (142), an antenna (143), and a memory.

The base (141) is arranged to form the body of the electronic device (140), and the main chip (142), antenna (143), and memory may be arranged on the base (141).

The main chip (142) is provided on the base (141) and may be provided as an electronic module including electronic circuits.

The antenna (143) may be provided on the base (141) and may be arranged to be connected directly or indirectly to the main chip (142).

Specifically, as shown in Fig. 3, the antenna (143) may be characterized by being formed to extend outwardly and be exposed on both sides from the base.

Furthermore, the antenna (143) may be provided in a spring form.

The antenna (143) according to this spring-type of first embodiment is formed to comprise antenna units forming a closed loop with a constant pattern, wherein the pitch (P) may denote the spacing between repeating antennas.

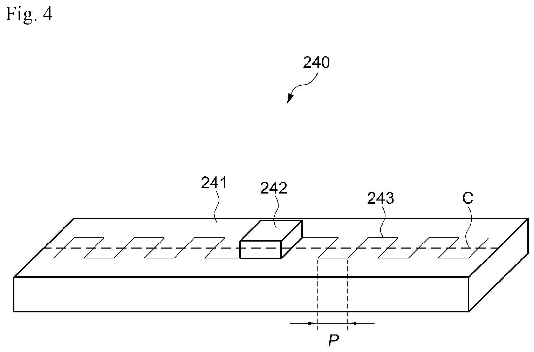

Fig. 4 shows an electronic device according to a second embodiment of the present invention.

As shown in Fig. 4, the electronic device (240) may be provided in the form of a base (241), a main chip (242) provided on the base (241), and an antenna (243) printed on the base (241).

In this case, the antenna (243) on the base (241) may be formed using a thin film, etc.

Thus, the antenna (143, 243) may be provided in an exposed configuration, or in a configuration involving soldering or encapsulating the chip. The antenna (143, 243) may also be configured independently of the main chip (142).

The antenna (243) according to this second embodiment of the two-dimensional film type is formed as an antenna unit comprising closed loops arranged in a regular pattern based on a centerline (C), wherein the pitch (P) may denote the spacing between antennas. Specifically, the pitch (P) of the antenna (243) according to the second embodiment may be defined as the spacing of the screw threads.

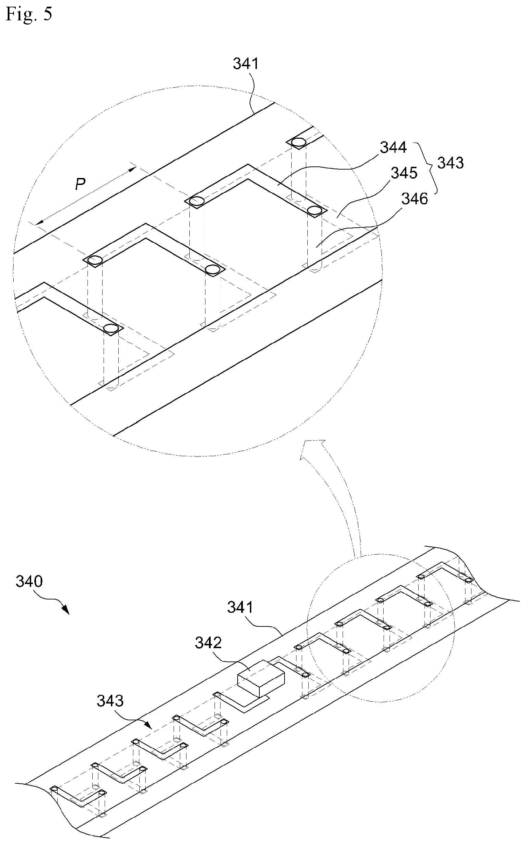

Fig. 5 shows an electronic device according to a third embodiment of the present invention.

Referring to Fig. 5, the electronic device (340) may be provided in the form of a base (341), a main chip (342) provided on the base (341), and an antenna (343) printed on the base (341).

The base (341) may be formed of a dielectric material. The dielectric material may be made of FR-4 PCB or FPCB. FR-4 PCB or FPCB is a high-dielectric material relative to air. Furthermore, the base (341) may be provided in a strip form formed longer in length than in width. In this case, the base (341) is formed with a minimum width, thickness, and length that does not damage the tire rubber.

The main chip (342) may be arranged to be mounted at the center of the top surface of the base (341). The main chip (342) may be mounted on the base (341) in a flip chip configuration. When the main chip (342) is mounted on the base (341) in a flip chip configuration, wire bonding is omitted, eliminating the need for soldering, thereby simplifying the manufacturing process. and the connection area between the main chip (342) and the antenna (343) can be connected using a conductive pattern, thereby enhancing the connection reliability of the connection area between the main chip (342) and the antenna (343).

The antenna (343) may be manufactured as a three-dimensional pattern antenna with left-right symmetry to secure the maximum possible antenna length on the limited base (341).

The antenna (343) may include an upper pattern (344), a lower pattern (345), and a via hole (346).

The upper pattern (344) is formed on the upper surface of the base (341), and the lower pattern (345) is formed on the lower surface of the base (341). The via hole (346) is formed through the base (341) and may be provided to connect each of the plural upper patterns (344) and each of the plural lower patterns (345), thereby forming a pattern inside the base (341).

The upper patterns (344) and lower patterns (345) may be formed by attaching copper foil to the top and bottom surfaces of the base (341) and then etching, or by forming a seed layer and a plating layer on the top and bottom surfaces of the base (341) and then etching.

A plating layer may be further formed in the via hole (346) connecting the upper pattern (344) and the lower pattern (345).

The antenna (343) according to this third plate-type embodiment is formed as an antenna unit comprising closed loops with a constant pattern, wherein the pitch (P) may denote the spacing between antennas each including one upper pattern (344) and one lower pattern (345).

Again, referring to Fig. 3, the antenna (143) may be arranged at intervals of 0.1 to 10 mm, either equidistantly or non-equidistantly, and may be provided using materials such as a single metal, an alloy, a polymer containing CNTs, or a printed material.

Furthermore, the antennas (143) may be coated with conductive or nonconductive materials.

The memory is provided to store tire information such as manufacturer, item information, and serial barcode, and may be provided in one or more units with a size of 96 bits or more.

Moreover, the electronic device (140) may be designed to have a transmission frequency at least 1.05 times greater than the standard receiving frequency for measuring tire information.

More specifically, it may be arranged to derive the dielectric constant from the attachment position of the electronic device (140) to the receiving device (150).

Here, the measurement location of the dielectric constant is the location where the straight line drawn between the installation locations of the electronic device (140) and the receiving device (150) intersects the tire, excluding air. Furthermore, the receiving device (150) may be arranged to be located at a distance of 1 mm to 1,500 mm from the surface of the tire sidewall.

Factors affecting this dielectric constant may include one or more rubbers for the tire composition, one or more carcasses, and other semi-finished products such as polymers.

That is, it may be arranged to derive the dielectric constant by measuring the dielectric constant affected by obstacles located between the electronic device (140) and the receiving device (150).

Next, the electronic device (140) may be arranged to be designed to transmit a value obtained by multiplying the received frequency measured by the receiving device (150) by the square root of the derived dielectric constant.

Furthermore, the receiving device (150) may be further arranged to determine whether the received frequency falls within a preset error range relative to the target received frequency, thereby selecting information.

Specifically, the receiving device (150) may be arranged such that when a frequency is received, it first compares whether the received frequency falls within the target received frequency and a preset error range.

Furthermore, if the receiving frequency falls outside the target received frequency and the preset error range, the received information may be discarded without being utilized.

That is, the receiving device (150) may be configured to obtain only information corresponding to a received frequency within a preset error range, then analyze it to provide the user with the necessary information.

The present invention, arranged in this manner, can minimize the possibility of information modulation based on frequency, thereby further enhancing the reliability of the information provided to the user.

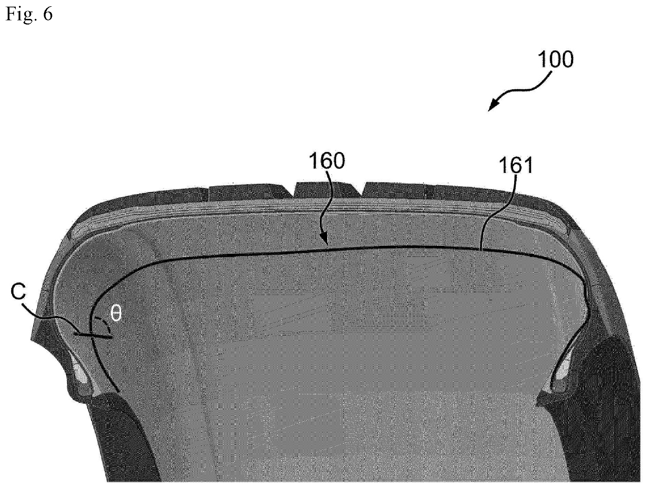

Fig. 6 shows the angle between the centerline of the electronic device and the carcass of a tire equipped with the electronic device, considering the carcass arrangement spacing and angle according to an embodiment of the present invention.

Referring to Fig. 6, the carcass (160) may be provided with a plurality of carcass cord (161). Furthermore, the carcass cord (161) may be arranged to form an angle of 90 degrees with the direction of travel.

Furthermore, the electronic device (140) may be arranged such that the centerline (C) connecting the centers of both ends of the antenna (143) in a straight line forms an angle of 70 to 110 degrees with the carcass cord (161).

More preferably, the electronic device (140) may be arranged such that the centerline (C) connecting the centers of both ends of the antenna (143) in a straight line and the carcass cord (161) form an angle of 80 to 105 degrees.

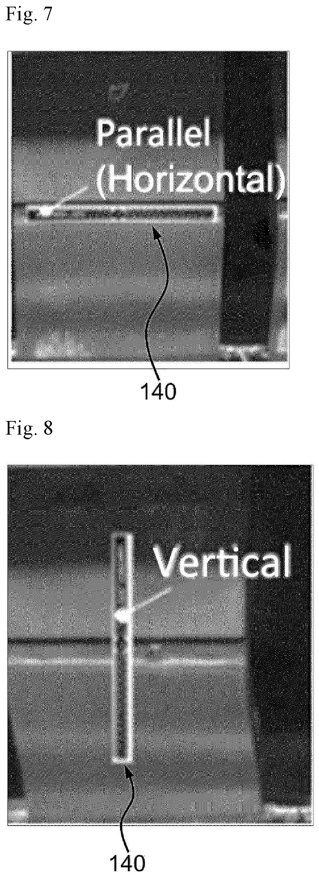

Fig. 7 shows the angle between the centerline of the electronic device and the carcass cord is 90 degrees according to an embodiment of the present invention, and Fig. 8 shows the angle between the centerline of the electronic device and the carcass cord is 0 degrees.

Referring further to Fig.s 7 and 8, as shown in Fig. 7, when the electronic device (140) forms a 90-degree angle with the carcass cord (161), the direction of stress generated by the flexing motion from the bead wire to the tread direction of the tire (100) is parallel to the direction of the electronic device (140). Consequently, the durability degradation of the electronic device (140) was minimal.

Specifically, bending test results showed that the electronic device (140) could stably measure signals even after 5 million cycles.

However, as shown in Fig. 8, when the electronic device (140) formed a 0-degree angle with the carcass cord (161), the direction of stress generated by the flexing motion from the bead wire to the tread direction of the tire (100) was perpendicular to the direction of the electronic device (140), resulting in a significant deterioration in the durability of the electronic device (140).

Specifically, the bending test results showed that stable signal measurement was only possible up to 25 cycles.

Therefore, the electronic device (140) is positioned such that the center line (C) connecting the centers of both ends of the antenna (143) and the carcass cord (161) form an angle of 70 to 110 degrees or 80 to 105 degrees, thereby minimizing damage caused by the flexing motion of the tire (100).

Furthermore, the electronic device (140) may be formed with a width and thickness of 0 to 3 mm or less, and a total length of 30 mm to 100 mm. The reason for this arrangement is that the thinner and shorter the thickness of the wireless electronic device (140), the less deformation occurs due to the flexing motion of the tire (100), resulting in less durability degradation. Conversely, if the length of the electronic device (140) is excessively short or thin, there is a problem where durability degrades even with minor impacts. Therefore, while there are no restrictions on the shape of the electronic device (140), it is desirable that it be provided within the above range.

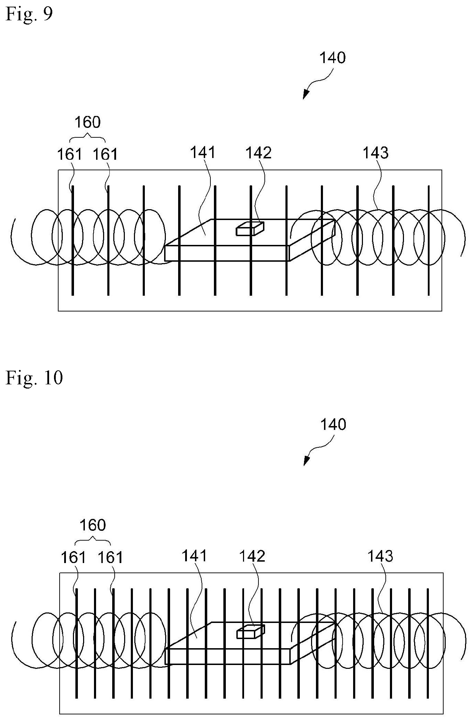

Fig. 9 shows the arrangement of the electronic device and the carcass according to an embodiment of the present invention.

The electronic device (140) may be arranged such that the antenna (143) and the carcass cord (161) do not overlap.

More specifically, the electronic device (140) may be arranged such that the antenna unit, defined as the antenna (143) forming a closed loop as described in relation to Fig.s 3 to 5, is arranged without overlapping between the arrayed carcass cord (161).

Specifically, the spacing between the carcass cord (161) and the spacing between the antenna units may be set differently.

For example, the electronic device (140) may be arranged such that the pitch, which is the spacing of the antenna (143), is positioned between at least one pair of adjacent carcass cord (161). For this purpose, the pitch (P) length of the antenna (143) may also be adjusted.

Fig. 10 shows an arrangement of an electronic device and a carcass according to another embodiment of the present invention.

Alternatively, as shown in Fig. 10, the electronic device (140) may be arranged such that at least one or more carcass cords (161) are positioned within the pitch, which is the spacing of the antenna (143). For this purpose, the pitch (P) length of the antenna (143) may be adjusted

Specifically, the pitch, which is the spacing of the antenna (143), is typically arranged at equal or unequal intervals ranging from 0.01 mm to 2.00 mm.

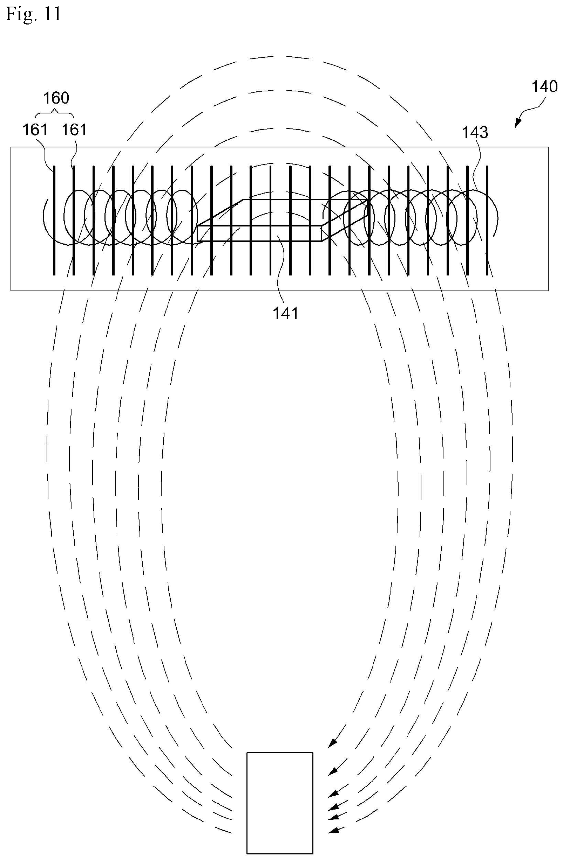

Fig. 11 shows the electromagnetic field according to a first embodiment of the present invention.

As shown in Fig. 11, the antenna (143) is connected to the main chip (142) of the electronic device (140) operating wirelessly. An electromagnetic field supplied from an external dedicated tool is coupled to the antenna, generating an induced current. Therefore, the pitch spacing and the number of windings of the antenna (143) are critically important.

A higher pitch count per unit length enables the generation of greater induced current or voltage. The external electromagnetic field is transmitted through the rubber of the tire (100) and the carcass cord (161). The larger the magnetic field strength and the thinner and more homogeneous the tire (100) structure, the greater the induced current or voltage supplied to the wireless electronic device module.

The carcass cord (161), typically defined as EPI, is arranged at intervals of 0.2 to 0.3 mm when converted numerically.

The induced electromotive force (V) can be calculated as the product of the change in magnetic flux density (Φ) per unit time and the number of turns (N) multiplied by the magnetic flux density.

Therefore, to increase the voltage induced in the antenna (143) embedded within the tire, either the externally supplied magnetic field strength must be increased or the number of turns must be increased.

The externally supplied magnetic field is difficult to vary when using a tool, so it is calculated as a fixed constant. Although an AC waveform can be supplied to calculate the rate of change, its magnitude is calculated as a constant that does not change. Furthermore, there is a limitation that the length of the antenna for a wireless electronic device cannot be increased infinitely.

Therefore, the most desirable method is to arrange the carcass code (161) and the antenna (143) so that they do not overlap, thereby maximizing the induced electromotive force.

Accordingly, the present invention proposes a method to maximize the induced electromotive force by arranging the antenna (143) pitch of the electronic device (140) such that at least one antenna pitch is positioned between the carcass code (161), or at least one carcass code (161) is cross-positioned between the antenna pitches (143).

Furthermore, to enhance this induced electromotive force, it is preferable that the longitudinal direction of the electronic device (140) be arranged at an angle of 70 to 110 degrees relative to the carcass code (161), as described above.

Moreover, since guide lines are arranged at regular intervals on the surface of the semi-finished product of the carcass (160), the starting point of the centerline (C) of the electronic device (140) can be aligned and positioned relative to these lines.

When arranged in this manner, a structure can be secured where at least one antenna pitch (143) is positioned between the two carcass cords (161), or at least one carcass cord (161) is positioned between antenna pitches (143).

The present invention thus provided enables the electronic device (140) to be manufactured integrally with the tire (100).

Furthermore, according to the present invention, the problem of the electronic device (140) being damaged due to reduced durability caused by flexing movements of the tire, etc., can be minimized.

Moreover, according to the present invention, the induced electromotive force can be significantly increased to enhance the recognition performance of the wireless electronic device (140) even at greater distances.

Moreover, the present invention provides an optimal recognition distance because it designs the transmission frequency of the electronic device by reflecting the permittivity according to the desired reading location, tire structure, material, etc.

Although the present invention was described with reference to limited drawings, the above description is provided as an exemplary example of the present invention, and it should be understood that the present invention may be easily modified in other various ways without changing the spirit or the necessary features of the present invention by those skilled in the art. Therefore, the examples described above are only exemplary and should not be construed as being limitative in all respects. For example, the components described as single parts may be divided and the components described as separate parts may be integrated. Further, the techniques described above may be performed in a different order from the described method.

The embodiments described herein and the accompanying drawings merely illustrate some of the technical ideas included in the present invention. Therefore, the scope of the present invention is defined by the appended claims, and all modifications or variations derived from the meaning and scope of the claims and their equivalents should be interpreted as falling within the scope of the present invention.

### <Reference Signs>

100: Tire
110: First Point
120: Second Point
130: Third Point
140: Electronic device
141: Base
142: Electronic chip
143: Antenna
150: Receiving device
160: Carcass
161: Carcass cord
240: Electronic device
241: Base
242: Electronic chip
243: Antenna
340: Electronic device
341: Base
342: Electronic chip
343: Antenna
344: Upper Pattern
345: Bottom Pattern
346: Via Hole

## Claims

1. A tire having an electronic device considering the arrangement of the carcass comprising:
a carcass having a plurality of carcass cords; and
an electronic device provided on the sidewall having an antenna extending in the longitudinal direction,
wherein the antenna forms a closed loop is defined as an antenna unit,
wherein the antenna unit arranged not to overlap between the arranged carcass cord.

2. According to the claim 1,
the electronic device is configured in that
one or more pitch of the antennas, which is an interval of the antennas, is arranged between a pair of adjacent carcass cords.

3. According to the claim 1,
the electronic device is configured in that
one or more carcass cord is arranged within the pitch of the antenna, which is an interval of the antenna.

4. According to the claim 1,
the electronic device comprising:
a base forming a body;
a main chip provided on the base and including an electronic module; and
the antenna configured to be connected to the main chip.

5. According to the claim 1,
the pitch of the antenna is arranged at equal or unequal intervals of 0.01 to 2.00 mm.

6. According to the claim 1,
the electronic device is configured in that
a center line connecting centers of both ends of the antenna in a straight line forms an angle of 70 to 110 degrees with the carcass cords.

7. According to the claim 1,
the electronic device is designed to have a transmission frequency at least 1.05 times greater than the standard receiving frequency for measuring tire information.

8. According to the claim 1,
the carcass codes are arranged at intervals of 0.2 to 0.3 mm.

9. According to the claim 1,
wherein defined as a first point where the bead wire and bead wire rubber meet, as a second point where the end of the bead filler, and as a third point where the end of the belt,
wherein the electronic device is arranged to be formed on the sidewall between the first point and the third point.

10. According to the claim 9,
the electronic device is located at least 11 mm away from both the first point and the third point.
